# EUROPEAN PATENT SPECIFICATION

(11) **EP 1 177 890 B1**
(45) Date of publication and mention of the grant of the patent: **09.06.2004**
(21) Application number: 01500185.2
(22) Date of filing: 13.07.2001
(51) Int. Cl.: B32B 3/30, B32B 5/18, B32B 29/00, B60R 13/02

(54) **Procedure for obtaining a laminar composite with improved vibro-acoustic behaviour, product so obtained and auxiliary tool employed**
Verfahren zur Herstellung eines geräusch- und vibrationsdämmenden Schichtkörpers, Schichtkörper dadurch hergestellt, sowie im Verfahren verwendetes Hilfswerkzeug
Méthode d'obtention d'un composite laminaire ayant de meilleures propriétés accoustiques et antivibratoires, composite obtenu et dispositif auxiliaire utilisé

(30) Priority: 25.07.2000 ES 200001861
(43) Date of publication of application: 06.02.2002
(73) Proprietor: Grupo Antolin Ingenieria, S.A., E-09007 Burgos (ES)
(72) Inventor: Cremades Schultz, Alberto, 009007 Burgos (ES); Sanchez Lite, Alberto, 09007 Burgos (ES)
(74) Representative: Carpintero Lopez, Francisco

(56) References cited:
- EP-A- 0 364 102
- EP-A- 0 825 066
- DE-A- 3 506 488
- GB-A- 1 589 843
- DATABASE WPI Section Ch, Week 200012 Derwent Publications Ltd., London, GB; Class A32, AN 2000-129273 XP002184951 -& JP 11 334486 A (KANEKA CORP), 7 December 1999 (1999-12-07)

## Description

### OBJECT OF THE INVENTION

The present invention relates to a procedure for obtaining a laminar composite for improving the vibro-acoustic behaviour of surfaces, the clear purpose of which is to improve the behaviour of surfaces subjected to an external excitation which can produce undesired vibration and noise. The procedure is based on implementing, during the actual process of moulding the plate or laminar composite, a series of imprints with reticular geometry, which form intercommunicating channels, carried out, at least, on one of the faces of the laminar composite.

It is also an object of the invention, the product obtained based on the foregoing procedure, said product consisting of the laminar composite, provided with, on, at least, one of its faces with an impressed grooving in the form of a reticular grid.

It is likewise object of the invention the pertinent auxiliary tool employed for carrying out the grooving on the pertinent face of the laminar composite.

The product obtained based on the procedure of the invention, finds application on all those surfaces, be they of machines, vehicles, walls, etc., which undergoing some type of excitation, can come to produce some undesirable type of vibration or noise. In particular, the laminar composite of the invention finds special application in the motor vehicle sector for the attenuation of undesired spurious noise produced in the external sheet metal of the roof of the vehicles.

### BACKGROUND OF THE INVENTION

As is known, the surfaces subjected to an external excitation, can produce undesired vibration and noise, there being presently different solutions which seek to improve the behaviour of that type of surfaces, solutions which always try to tackle the problem by modifying one or various of the three key factors on which depends the vibro-acoustic behaviour of the surface and which are: a) the stiffness (crossties, roofing board); b) the putty (asphaltic putties); and c) the damping (foams, cardboards).

One of said solutions consists in applying adhesive to multilayer composite panels of uniform thickness to said surfaces, in such a manner that they behave as a unit, wherefor these composite panels are usually constituted by a central layer of a foam material and two external layers of a stiffer material, as may be paper, cardboard, etc.

The effect achieved is twofold, since, on one hand, the stiffness is augmented without significantly increasing the mass of the assembly and, on the other hand, the damping effect of the system is augmented, the capacity for dissipating the vibration energy being therefore increased.

A precedent of the aforementioned solution is to be found in the European Patent with publication number 0825066, in which is claimed a multilayer panel constituted by a core of high density foam, which can be polyethylene, polypropylene or polyethylene terephthalate, and two external layers of thick paper, such as grey paper or similar, said layers being joined to each other and the entire assembly joined to the surface to be stiffened by means of an additional coat of adhesive with a polyurethane or isocyanate base.

JP-A-11334486 discloses a laminated foam sheet having a thermoplastic resin foam sheet whose one or both sides are laminated with non-foaming layers. Embossing is carried out on one surface of the non-foaming layer.

### DESCRIPTION OF THE INVENTION

The procedure proposed is based on that, to the laminar composite or multilayer composite panel, which is obtained by moulding, a geometric modification is made to the surface, on at least one of the faces, consisting of an impressed corrugation in the form of a reticular grid, being completed with the application of some adhesive bands on the faces of the laminar composite panel obtained, for the final securing on what it is intended to apply said composite.

More specifically, the invention is based on introducing a modification of the geometry on, at least, one of the surfaces or faces of the laminar composite, and also a special or particular distribution of the adhesive as final securing means.

The modification of the geometric form consists, as already mentioned, in carrying out simultaneously with the process of obtaining the laminar composite, an impressed grooving with form of reticular grid, formed by a master which is repeated successively until completion of the whole face or surface of the composite, and that master or corresponding auxiliary tool being constituted in a pattern formed by a regular closed polygonal shape of four or more sides, surrounded by other closed polygonal shapes adjoining until it is completely covered.

The central and surrounding polygons maintain a ratio of proportionality between their maximum diagonals, which can vary between 0.5 and 1.5, said maximum diagonal having to have a length which can vary between 10 and 100 times the value of the mean width of the groove, the dimensions of which must be such that the depth is or is or lies between 20 and 40% of the thickness, whilst the means width of the groove has to be 3 to 6 times the depth.

As previously mentioned, said geometric form is obtained in the same process for obtaining or forming the multilayer laminar composite, said forming being carried out in a hot moulding process, inside which the geometric shape mentioned is achieved, at the same time as the different constituent layers are joined together.

In the end, with these restrictions in shape, it is sought on one hand to improve the stiffening and vibro-acoustic damping effects of the panel, and on the other hand, to ensure that its original characteristics are not impaired.

Also forming part of the object of the invention is the manner of application and distribution of the adhesive which has to be employed in the final securing of the composite obtained, adhesive which shall be applied in longitudinal bands, occupying a total surface area which can vary between 20 and 60% of the total surface area of the assembly, and its distribution has to be such that once applied over both faces, the width of the resulting adhesive bands shall vary between 10 mm and 50 mm, whilst the separation between the centreline of said consecutive bands shall vary between six and ten times that of the width.

With regard to the quantity of adhesive, it can vary between 30 and 80% of the total mass of the composite panel obtained.

The adhesive can also be applied in the form of cords and its composition can be of the butyl, acrylic or polyurethane type, with the particularity that there exists the possibility of applying it at the time of mounting the assembly on the surface whose vibro-acoustic behaviour it is sought to improve, or it can be incorporated beforehand and protected by one or more paper sheets which are removed at the moment of assembly.

Likewise object of the invention is the auxiliary tool employed for implementing the grooved reticular geometry, said tool being constituted by a metallic structure of reticular shape which reproduces the lines of the grooved or channelled shape that it is desired to reproduce on one of the faces of the panel or laminar composite, all of this such that once the different layers of materials that are to form the composite have been arranged in the mould, and which shall consist of a central layer of polyurethane foam and two external layers of paper, joined by intermediate layers of adhesive, the auxiliary tool is arranged on top of the aforementioned layers, after which the mould is closed, whereby the tool is clamped against the layers of material, leaving the end piece shaped, at the same time as the imprint of said tool is marked on the chosen face and with the form desired, all this such that once the mould is opened the shaped piece is withdrawn and the tool is free without further problems to be used in obtaining another piece.

### DESCRIPTION OF THE DRAWINGS

In order to complete the description being made and for the purpose of assisting in a better understanding of the characteristics of the invention, in accordance with an example of preferred practical embodiment thereof, a set of drawings are attached as an integral part of said description, said drawings being of an illustrative and not restrictive nature and showing the following:

Figure 1.- Shows a general drawing of a piece or laminar composite obtained according to the procedure of the invention, in which can be seen the grooves in form of reticular grid implemented on one of its faces.

Figure 2.- Shows the disposition of the layers which form the laminar composite and the auxiliary tool for obtaining the imprint or grooves in reticular form, both components being arranged between the two parts of a mould free of pressure.

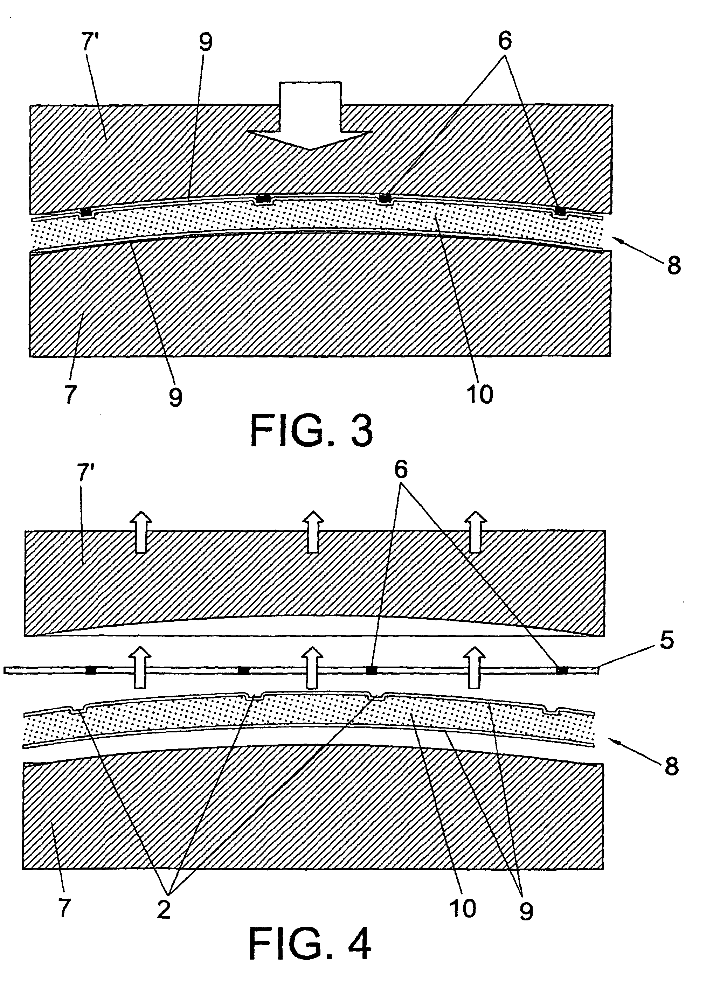

Figure 3.- Shows the following stage in which the mould has been closed and the auxiliary tool pressed against the laminar composite, imprinting the reticular grooves on the pertinent face of said composite.

Figure 4.- Shows, finally, the opening of the mould once the process has been carried out, in which it is possible to see the laminar composite obtained with the grooves in form of reticular grid and the separated auxiliary tool by means of which precisely that reticular grid grooving was achieved, in a position of being able to be removed for its reuse.

### PREFERRED EMBODIMENT OF THE INVENTION

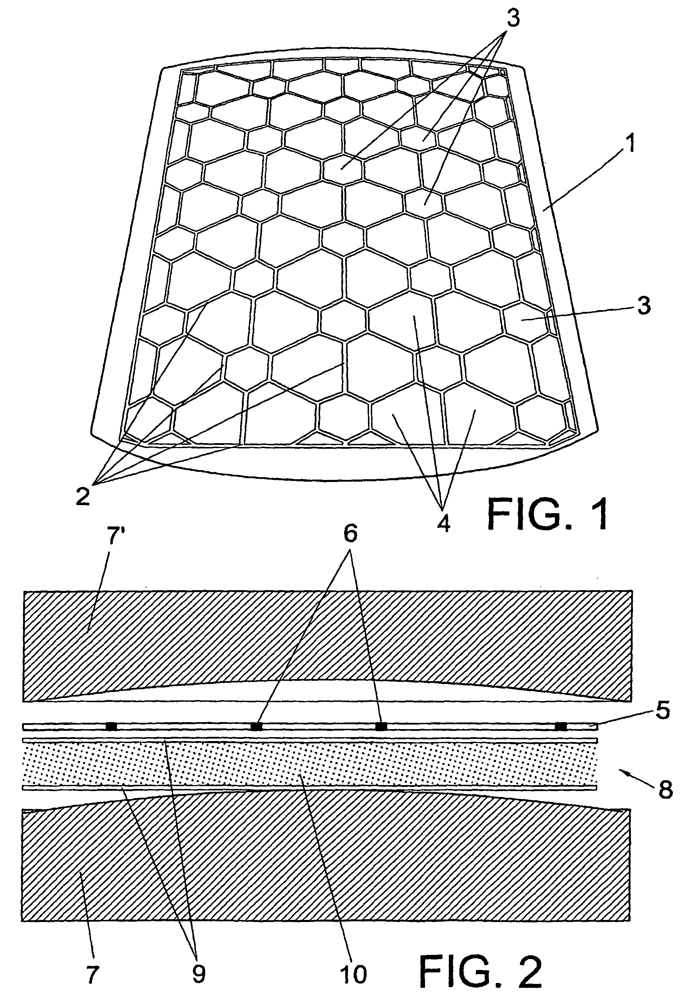

As can be seen in the aforementioned figures, and specifically in relation with figure 1, the laminar composite (1) obtained in accordance with the procedure of the invention, has on one of its faces an imprint or grooving (2) based on successive closed polygonal outlines, which consist in the repetition of a pattern with a central regular polygonal outline (3) from which branch polygonal outlines (4) which enclose the foregoing and are closed upon themselves, this configuration of pattern being repeated over the whole surface of, at least, one of the faces of the laminar composite (1). The depth of the grooving (2) has to lie between 10 and 40% of its thickness, whilst the mean width shall be three to six times the depth, it having been foreseen that the central (3) and surrounding (4) polygons of each pattern maintain a ratio of proportionality between their maximum diagonals, which can vary between 0.5 and 1.5, and whose maximum diagonal can have a length between ten and one hundred times the value of the mean width of the grooving (2).

That grooving is achieved by means of an auxiliary tool (5) constituted by a metallic and reticular grid in which the grid squares are logically delimited by the corresponding elements or ribs (6) of the actual reticular grid (5), which are those which during the moulding process shall implement the imprint or grooving (2).

The form of obtaining it consists in arranging in the pertinent lower mould (7) the composite (8) determined by two external layers (9) of paper, and an intermediate layer (10) of stiff polyurethane foam and similar, in order to dispose on that block or composite (8) the auxiliary tool (5) constituted by the aforementioned grid, and thereupon proceed to the closing of the upper piece (7') of the mould, which depression shall bring with it the implementation of the imprint and therefore of the grooving (2) on the corresponding face of the composite (8), specifically in the case shown, on the upper paper layer (9) thereof.

The piece or laminar composite (1) obtained, based on the process described and with the collaboration of the auxiliary tool (5), shall result in having one of its faces provided with the grooving (5) based on polygonal outlines occupying the whole surface, in such a manner that based on those features, the stiffening and vibro-acoustic damping effects of the mentioned panel or laminar composite (1) are improved.

Finally, that piece or composite shall incorporate the pertinent adhesive for its fastening, by way of example, to the sheet metal corresponding to the roof of a vehicle, and which adhesive is applied in longitudinal bands with a determined distribution, wherein the quantity of adhesive can vary between 30 and 80% of the total mass of the piece or laminar composite (1), it having been foreseen that the application of said adhesive may be carried out at the time of mounting the assembly of the surface whose vibro-acoustic behaviour it is desired to improve, or else be incorporated beforehand and protected with one or various siliconed paper sheets which are removed at the moment of carrying out the actual final assembly.

## Claims

1. Procedure for obtaining a laminar composite (1) for improving the vibro-acoustic behaviour of surfaces, wherein the laminar composite is constituted by three layers, one intermediated (10) of stiff polyurethane foam and two external (9) of paper, joined with intermediate layers of adhesive, the shaping being carried out by hot-moulding, **characterised in that** it consists in implanting, in the actual mould shaping, imprints in the form of grooving (2) on, at least, one of the faces of the resulting laminar composite, and wherein said grooving forms closed polygonal outlines which are repeated over the whole surface or face of the composite itself, according to the reticular grid configuration.

2. Procedure for obtaining a laminar composite (1) in accordance with claim 1, **characterised in that** on the surface of the laminar composite (1) obtained, adhesive is applied, in a quantity of between 30 and 80% of the total mass of the laminar composite (1), said adhesive being distributed in longitudinal bands or in form of cords with an occupancy lying between 20 and 60% of the total surface of the laminar composite (1).

3. Procedure for obtaining a laminar composite (1) in accordance with claim 2, **characterised in that** the width of the adhesive bands lies between 10 mm and 50 mm, whilst the separation between consecutive bands lies between six and ten times the width thereof.

4. Procedure for obtaining a laminar composite (1) in accordance with claims 2 and 3, **characterised in that** the adhesive can be of the butylic, acrylic or polyurethane type, and be applied at the moment of mounting the assembly on the surface the acoustic behaviour of which it is wished to improve or incorporated beforehand with the protection of siliconed paper sheets which are removed at the time of final assembly.

5. Laminar composite (1) for improving the vibro-acoustic behaviour of surfaces obtained in accordance with the procedure of the previous claims, **characterised in that** on, at least, one of its faces it is provided with grooving (2) in reticular grid form based on polygons (3) surrounded by other adjoining polygons (4), the whole being repeated in form of patterns, covering the entire surface of the face or surface of the piece constituted by the laminar composite (1).

6. Laminar composite (1) in accordance with claim 5, **characterised in that** the central (3) and surrounding (4) polygons of the grooving in form of reticular grid (2) maintain a ratio of proportionality between their maximum diagonals, lying between 0.5 and 1.5, said maximum diagonal having a length which can vary between 10 and 100 times the value of the means width of the groove (2).

7. Laminar composite (1) in accordance with claims 5 and 6, **characterised in that** the grooving (2) has a depth lying between 20 and 40% of the thickness and a mean width of three to six times the depth.

8. Laminar composite (1) in accordance with claims 5, 6 and 7, **characterised in that** the central polygons (3) are of regular outline with four or more sides, and the adjoining polygons (4) have shapes which together with the former ones define pattern plates which are repeated over the whole surface of the piece constituted by the laminar composite (1).

9. Auxiliary tool for implementing a grooving on the surface of a laminar composite, which is used in the procedure for obtaining a laminar composite (1) intended for improving the vibro-acoustic behaviour of surfaces in accordance with the procedure and product obtained, in accordance with the previous claims, **characterised in that** it is constituted by a metallic structure (5) of reticular shape, consisting of a pattern formed by a regular polygonal shape of four or more sides, surrounded by other closed polygonal shapes adjoining until it is completely covered, which reproduces the lines of the grooved shape that it is desired to reproduce on one of the faces of the laminar composite in the moulding process of the layers which form the composite, in order to obtain the latter, implant the corresponding imprint or grooving (2) on the surface of the composite (1).

## Patentansprüche

1. Verfahren zum Herstellen eines Laminatverbundwerkstoffs (1) zur Verbesserung des vibroakustischen Verhaltens von Oberflächen, wobei der Laminatverbundwerkstoff aus drei Schichten besteht, eine mittlere (10) aus steifem Polyurethanschaum und zwei äussere (9) aus Papier, die mit Zwischenschichten aus Klebstoff verbunden sind und die Formgebung mittels Warmpressen erfolgt, **dadurch gekennzeichnet, dass** es darin besteht, dass in die Form auf mindestens eine Seite des entstandenen Laminatverbundwerkstoffs eine Aufdrucke in Form von Vertiefungen (2) eingesetzt werden, wobei besagte Vertiefungen geschlossene, mehreckige Umrisse bilden, die sich über die ganze Oberfläche oder Seite des Verbundwerkstoffs selbst wiederholen gemäss der netzförmigen Gitteranordnung.

2. Verfahren zum Herstellen eines Laminatverbundwerkstoffs (1) gemäss Anspruch 1, **dadurch gekennzeichnet, dass** auf der Oberfläche des erhaltenen Laminatverbundwerkstoffs (1) Klebstoff in einer Menge zwischen 30 und 80% der der Gesamtmasse des Laminatverbundwerkstoffs (1) angebracht wird, wobei besagter Klebstoff in längsverlaufenden Streifen aufgebracht wird oder in Form von Linien, deren Bedeckung zwischen 20 und 60% der Gesamtoberfläche des Laminatverbundwerkstoffs (1) beträgt.

3. Verfahren zum Herstellen eines Laminatverbundwerkstoffs (1) gemäss Anspruch 2, **dadurch gekennzeichnet, dass** die Breite des Klebstoffstreifens zwischen 10 mm und 50 mm liegt, während der Abstand zwischen den Streifen sechs bis zehn Mal deren Breite beträgt.

4. Verfahren zum Herstellen eines Laminatverbundwerkstoffs (1) gemäss Anspruch 2 und 3, **dadurch gekennzeichnet, dass** der Klebstoff butylisch, akrylisch oder polyurethisch sein kann und in dem Moment angebracht werden kann, in dem die Anordnung auf der Oberfläche angebracht wird, deren Akkustikverhalten verbessert werden soll oder vorher mit dem Schutz von silikoniertem Papier, das zum Zeitpunkt des endgültigen Zusammenbaus abgezogen wird.

5. Laminatverbundwerkstoff (1) zur Verbesserung des vibroakkustischen Verhaltens von Oberflächen erhalten gemäss dem Verfahren der vorangegangenen Ansprüche, **dadurch gekennzeichnet, dass** es auf mindestens einer der Seiten über Vertiefungen (2) in netzförmiger Gitteranordnung verfügt, die auf Mehrecken (3) basieren, die von anderen anliegenden Mehrecken (4) umgeben sind, wobei sich das Ganze in Form von Mustern wiederholt, die die ganze Seite oder Oberfläche des Teils bedecken, das der Laminatverbundwerkstoff (1) bildet.

6. Laminatverbundwerkstoff (1) gemäss Anspruch 5, **dadurch gekennzeichnet, dass** die mittleren (3) und umgebenden (4) Mehrecke der Vertiefung in Form von netzförmiger Gitteranordnung (2) ein proportionales Verhältnis zwischen ihren längsten Diagonalen beibehalten, das zwischen 0,5 und 1,5 liegt, wobei die besagte längste Diagonale zwischen 10 und 100 Mal den Wert der mittleren Breite der Vertiefung (2) hat.

7. Laminatverbundwerkstoff (1) gemäss Anspruch 5 und 6, **dadurch gekennzeichnet, dass** die Vertiefung (2) eine Tiefe zwischen 20 und 40% ihrer Dicke hat und eine mittlere Breite zwischen drei und sechs Mal ihrer Tiefe.

8. Laminatverbundwerkstoff (1) gemäss Anspruch 5, 6 und 7, **dadurch gekennzeichnet, dass** die mittleren Mehrecke (3) einen regelmässigen Umriss mit vier oder mehr Seiten haben und die umliegenden Mehrecke (4) Formen haben, die im Zusammenhang mit den vorgenannten Mehrecken Muster ausbilden, die sich über die ganze Oberfläche des Teils wiederholen, das der Laminatverbundwerkstoff (1) bildet.

9. Hilfswerkzeug zum Anbringen einer Vertiefung auf der Oberfläche eines Laminatverbundwerkstoffs, das bei dem Verfahren zur Herstellung eines Laminatverbundwerkstoffes (1) zur Verbesserung des vibroakustischen Verhaltens von Oberflächen gemäss dem Verfahren und des Produkts gemäss der vorangegangenen Ansprüche verwendet wird, **dadurch gekennzeichnet, dass** es aus einer Metallstruktur (5) in Gitterform besteht, die über ein Muster verfügt, das aus regelmässigen mehreckigen Formen mit vier oder mehr Seiten besteht, das von anderen geschlossenen, mehreckigen, anliegenden Formen umgeben wird, bis es vollständig bedeckt ist, womit die Linien der Form der Vertiefung wiedergegeben werden, die man auf der einen Seite des Laminatverbundwerkstoffs während des Formprozesses der Schichten aufbringen möchte, die den Werkstoff bilden, um den letzteren zu erhalten und den entsprechenden Aufdruck oder Vertiefung (2) auf der Oberfläche des Werkstoffs (1) aufzubringen.

## Revendications

1. Procédé d'obtention d'un matériau composite lamellaire (1) pour améliorer l'attitude vibro-acoustique des surfaces, dans lequel le matériau composite lamellaire est constitué de trois couches, l'une intermédiaire (10) de mousse de polyuréthane rigide, et deux extérieures (9) en papier, unies par des couches intermédiaires d'adhésif, la mise en forme étant réalisée par moulage à chaud, **caractérisé en ce qu'**il consiste à implanter, dans la forme de moule actuelle, des empreintes sous forme de rainure (2) sur, au moins, une des faces du matériau composite lamellaire résultant, et dans laquelle ladite rainure forme des contours polygonaux fermés qui se répètent sur la totalité de la surface ou de la face du propre matériau composite, selon la configuration sous forme de grille réticulaire.

2. Procédé d'obtention d'un matériau composite lamellaire (1) selon la revendication 1, **caractérisé en ce que** sur la surface du matériau composite lamellaire (1) obtenu, on applique de l'adhésif, dans une quantité allant de 30 à 80% de la masse total du matériau composite lamellaire (1 ), ledit adhésif étant distribué dans des bandes longitudinales o sous forme de cordons qui occupent un espace allant de 20% à 60% de la surface totale du matériau composite lamellaire (1).

3. Procédé d'obtention d'un matériau lamellaire (1) selon la revendication 2, **caractérisé en ce que** la largeur des bandes adhésives varie de 10 mm à 50 mm, tandis que la séparation entre les bandes consécutives varie de six à dix fois leur largeur.

4. Procédé d'obtention d'un matériau lamellaire (1) selon les revendications 2 et 3, **caractérisé en ce que** l'adhésif peut être de type butylique, acrylique ou polyuréthane, et il peut être appliqué au moment du montage de l'ensemble sur la surface dont on souhaite l'amélioration de son attitude acoustique ou il peut être incorporé d'avance avec la protection de feuilles en papier siliconé qui sont retirées lors de l'assemblage final.

5. Matériau composite lamellaire (1) pour améliorer l'attitude vibro-acoustique des surfaces, obtenu selon le procédé des revendications antérieures, **caractérisé en ce que** sur au moins une de ses faces il est pourvu d'une rainure (2) sous forme de grille réticulaire à base de polygones (3) entourés d'autres polygones (4) attenants, le tout se répétant sous forme de gabarits, en couvrant toute la surface de la face ou la surface de la pièce constituée par le matériau composite lamellaire (1).

6. Matériau composite lamellaire (1) selon la revendication 5, **caractérisé en ce que** les polygones centraux (3) et environnants (4) de la rainure sous forme de grille réticulaire (2), maintiennent un rapport de proportionnalité entre leurs diagonales maximales, allant de 0,5 à 1,5, ladite diagonale maximale ayant une longueur pouvant varier de 10 à 100 fois la valeur de la largeur moyenne de la rainure (2).

7. Matériau composite lamellaire (1) selon les revendications 5 et 6, **caractérisé en ce que** la rainure (2) a une profondeur allant de 20 à 40% de l'épaisseur et une largeur moyenne de trois à six fois la profondeur.

8. Matériau composite lamellaire (1) selon les revendications 5, 6 et 7, **caractérisé en ce que** les polygones centraux (3) ont un contour régulier de quatre côtés ou plus, et les polygones attenants (4) ont des formes qui conjointement avec celles des antérieurs définissent des plaques gabarits qui se répètent sur toute la surface de la pièce constituée par le matériau composite lamellaire (1).

9. Outil auxiliaire pour la mise en oeuvre d'une rainure sur la surface d'un matériau composite lamellaire, qui est utilisé dans le procédé d'obtention d'un matériau composite lamellaire (1) destiné à améliorer l'attitude vibro-acoustique des surfaces selon le procédé et le produit obtenu, selon les revendications antérieures, **caractérisé en ce qu'**il est constitué d'une structure métallique (5) de forme réticulaire, consistant en un gabarit formé par une forme polygonale régulière de quatre côtés ou plus, entourée par d'autres formes polygonales fermées attenantes, jusqu'à son recouvrement total, lequel reproduit les lignes de la forme de rainure que l'on souhaite reproduire sur une des faces du matériau composite lamellaire dans le procédé de moulage des couches qui forment le matériau composite. Afin d'obtenir ce dernier, on implante l'empreinte ou la rainure correspondante (2) sur la surface du matériau composite (1 ).
